# EUROPEAN PATENT SPECIFICATION

(11) **EP 4 721 449 B1**
(45) Date of publication and mention of the grant of the patent: **29.07.2026**
(21) Application number: 24740489.0
(22) Date of filing: 30.05.2024
(51) Int. Cl.: H04W 24/02

(54) **USER DRIVEN OPTIMIZATION OF A COMMUNICATION NETWORK**
BENUTZERGESTEUERTE OPTIMIERUNG EINES KOMMUNIKATIONSNETZES
OPTIMISATION CONTRÔLÉE PAR L'UTILISATEUR D'UN RÉSEAU DE COMMUNICATION

(30) Priority: 02.06.2023 FI 20235618
(43) Date of publication of application: 08.04.2026
(73) Proprietor: Elisa Oyj, 00520 Helsinki (FI)
(72) Inventor: ERTIMO, Riku, 00520 Helsinki (FI); SUNILA, Karri, 00520 Helsinki (FI)
(74) Representative: Papula Oy
(86) International application number: PCT/FI2024/050282
(87) International publication number: WO 2024/246430

(56) References cited:
- US-A1- 2017 215 094
- US-A1- 2020 274 609
- US-A1- 2021 385 670
- US-A1- 2022 140 939
- US-A1- 2022 330 032
- US-A1- 2022 346 161

## Description

### TECHNICAL FIELD

Various example embodiments generally relate to the field of wireless communications. Some example embodiments relate to user driven optimization of a communication network.

### BACKGROUND

A wireless communication network may be analysed and optimized in many different ways, for example, based on key performance indicators (KPI) of the network. One example of such a KPI is the reference signal received power (RSRP). The KPIs can then be used, for example, for handover decisions of a user equipment (UE).

The optimization in a communication network is typically performed using cell level data. When the optimization is performed based on the cell level data, it naturally affects a group of UEs in a cell. Therefore, there is a need for enabling more versatile solutions for optimizing the communication network.

US 2022330032 A1 discloses methods and apparatus for optimizing antenna beam and performance within a wireless system. US 2022/346161 A1 discloses concepts underlying the realization of a virtual data session, and in more detail to a virtual data session control device, to a fixed wireless access device supporting a virtual data session, to a user data plane device supporting a virtual data session, to an access and mobility management device supporting a virtual data session, and to related control methods. US 2020/274609 A1 discloses a fifth generation new radio repeater state machine. US 2017/215094 A1 discloses a quality analysis and optimization module to monitor the health of the wireless channels in WLAN networks. US 2022/140939 A1 discloses methods and apparatus for enhancing data rates in a small-cell wireless communication network. US 2021/385670 A1 discloses a method and system to control traffic in a cellular network comprising a plurality of access points (APs) serving a plurality of user equipment devices (UEs). EP 4178248 A1 discloses grid-of-beams optimization for stationary devices.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. The invention is defined by the claims. The embodiments, aspects and examples disclosed below are included for illustrative purposes and for facilitating the understanding of the invention.

Example embodiments of the present disclosure enable to optimize a communication network by taking into account stationary uses and user level radio frequency data. This benefit may be achieved by the features of the independent claims. Further example embodiments are provided in the dependent claims, the description, and the drawings.

According to a first aspect, a computer-implemented method comprises: obtaining user level layer 3 radio frequency data of a plurality of user devices, the user level layer 3 radio frequency data being associated with a communication network; analysing the user level layer 3 radio frequency data to identify a performance of at least one stationary user device, wherein the analysing comprises calculating at least one key performance indicator, KPI, based on the user level layer 3 radio frequency data, wherein the at least one KPI comprises reference signal received power, RSRP, of the at least one stationary user device combined with timing advance, TA, and creating a performance model based at least in part of the user level layer 3 radio frequency data and the at least one KPI; and outputting, based on the analysis, optimization information to optimize the performance associated with the at least one stationary user device.

According to an example embodiment of the first aspect, outputting optimization information may comprise outputting an instruction to replace a stationary user device.

According to an example embodiment of the first aspect, outputting optimization information may comprise outputting an instruction to replace a radio network element of the communications network.

According to an example embodiment of the first aspect, outputting optimization information comprises outputting an instruction to redirect an antenna of a radio network element of the communications network.

According to an example embodiment of the first aspect, outputting optimization information comprises outputting an instruction to change a physical location of a radio network element of the communications network.

According to an example embodiment of the first aspect, the method may further comprise identifying different users in the user level radio frequency data based on an international mobile subscriber identity.

According to an example embodiment of the first aspect, the method may further comprise: analysing the user level radio frequency data comprises determining, based on the user level radio frequency data, that a condition associated with at least one key performance indicator is triggered with respect to the at least one stationary user device; and outputting the optimization information comprises outputting the optimization information based on the determination.

According to an example embodiment of the first aspect, the method may further comprise: comparing a performance of stationary user devices to the performance model; and identifying the at least one stationary user device based on the comparison.

According to an example embodiment of the first aspect, the method may further comprise: comparing performance of stationary user devices to the performance model; and identifying the at least one stationary user device based on the comparison.

According to an example embodiment of the first aspect, the at least one key performance indicator comprises at least one of: cell stability; sector stability; site stability; time variant changes; expected radio frequency performance; and expected throughput performance.

According to a second aspect, an apparatus comprises means for performing any example embodiment of the method of the first aspect.

According to a third aspect, computer program or a computer program product comprises program code configured to, when executed by a processor, cause an apparatus at least to perform any example embodiment of the method of the first aspect.

According to a fourth aspect, an apparatus comprises at least one processor; and at least one memory including computer program code; the at least one memory and the computer code configured to, with the at least one processor, cause the apparatus at least to perform any example embodiment of the method of the first aspect.

Any example embodiment may be combined with one or more other example embodiments. Many of the attendant features will be more readily appreciated as they become better understood by reference to the following detailed description considered in connection with the accompanying drawings.

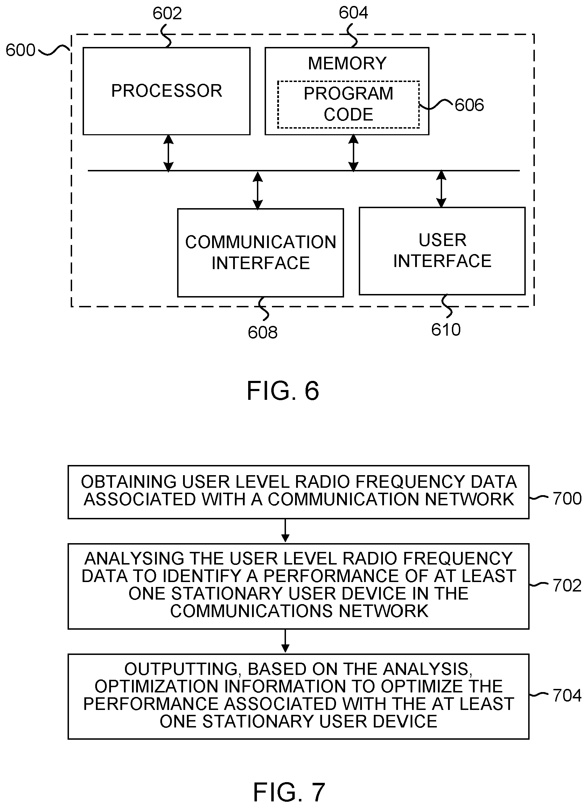

In the following, the invention is best understood in view of figure 7. The remaining embodiments, aspects and examples disclosed below are included for illustrative purposes and for facilitating the understanding of the invention.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a wireless communication network;
FIG. 2 illustrates an example of data analysed relating to a communication network according to an example embodiment;
FIG. 3 illustrates a flow diagram for network optimization according to an example embodiment:
FIG. 4 illustrates a flow diagram for network optimization according to an example embodiment;
FIG. 5 illustrates a graph representing a model relating to expected radio frequency performance according to an embodiment of the invention;
FIG. 6 illustrates an example of an apparatus configured to practise one or more example embodiments; and
FIG. 7 illustrates a method for user driven optimization of a communication network according to an embodiment of the invention.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Operational characteristics of a communication network, for example, a radio network, may be analysed and optimized with many different ways and based on various key performance indicators (KPI). A KPI may relate, for example, to stability (for example, cell, sector or base station changes per time period, time per a cell), radio frequency statistics (for example, channel quality indicator (CQI)), RSRP, timing advance (TA), throughput, Signal to Interference plus Noise Ratio (SINR), uplink KPIs, uplink and downlink pathloss, RSRP as a function of TA, throughput as a function of RSRP), serving layers (for example, data layer frequency, time per frequency) or miscellaneous aspects (for example, is the serving cell the expected one, is RSRP as expected, maximum RSRP, maximum throughput, strange mobility, changing KPI as a function of time for a stationary user etc.). Normally the KPIs have been obtained using cell level data, and any optimization made based on this data in a cell affects cells all users equally. In the following, a solution is provided in which user level radio frequency (RF) data is used for the network optimization in a communication network while at the same time considering at least one stationary user device in the communication network.

According to an example embodiment, a computer-implemented method may comprise obtaining user level radio frequency data associated with a communication network; analysing the user level radio frequency data to identify a performance of at least one stationary user device in the communications network; and outputting, based on the analysis, optimization information to optimize the performance associated with the at least one stationary user device.

Therefore, user level RF data combined with information about at least one stationary user device may be used as a basis for optimizing the communication network. A stationary user device may refer, for example, to a fixed wireless access (FWA) user that does not move or to a user device whose mobility in the communication network is very small or limited. The FWA user may be identified, for example, based on an international mobile subscriber identity (IMSI). The optimization may comprise various actions, for example, replanning azimuths, replanning antenna tilts, replacing a radio or an antenna, replacing a UE etc. In an example embodiment, the optimization may be performed automatically based on the output optimization information. In another example embodiment, the optimization may be performed manually based on the output optimization information.

Based on the illustrated solution, it is possible to identify stationary user devices whose performance is not optimal and perform necessary corrective actions in order to optimize their performance. Depending on the situation, the action may be different. It is possible to automatically detect if the corrective action relates to optimizing at least one network device operation and autonomously carrying out the corrective action. Furthermore, it is possible to automatically detect if the corrective action requires replacing user equipment (UE) or a component of a network device, for example, an antenna or a radio, and automatically creating a service ticket for it.

In general, it is possible to optimize network operation and enable improved service on user level. Instead of treating all users equally in the network, it is possible to optimize service, for example, for heavy users, such as static users like FWA users.

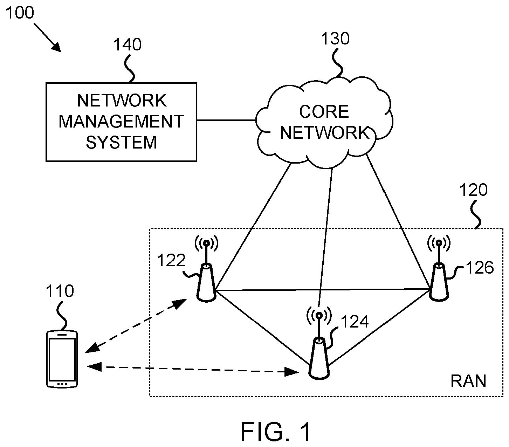

FIG. 1 illustrates an example of a wireless communication network 100. The communication network 100 may comprise one or more devices 110, which may be also referred to as client nodes, user nodes, user devices, or user equipment (UE). An example of a device is UE 110, which may communicate with one or more access nodes 122, 124, 126 of a radio access network (RAN) 120. An access node may be also referred to as an access point or a base station. The access nodes 122, 124, 126 of the RAN 120 may, for example, comprise 5^{th} generation access nodes (gNB). Communications between the UE 110 and the access nodes 122, 124, 126 may be bidirectional and hence any of these entities may be configured to operate as a transmitter, and/or a receiver.

An access node 122, 124, 126 may provide communication services within one or more cells, which may correspond to a geographical area(s) covered by signals transmitted by the access node. The access node 122, 124, 126 may be equipped with an omnidirectional antenna, thereby providing a circular coverage area. It is, however, possible to apply directive antennas to cover a desired area, e.g. within a sector of a transmission site. It is further possible to apply beamforming such that different UEs are served by different beams of a cell. A cell may be identified by a cell identifier (ID), for example, a physical cell ID (PCI). Within a coverage area of a cell, the UE 110 may be enabled to access the network via the access node of the cell.

The communication network 100 may further comprise a core network 130, which may comprise various network functions (NF) for establishing, configuring, and controlling data communication sessions of UE 110. A network management system 140 may be configured to perform network optimization based on various information (for example, KPIs) gathered from the RAN 120 and/or the core network 130.

The communication network 100 may be configured, for example, in accordance with the 4^{th} or 5^{th} generation (4G, 5G) digital cellular communication network, as defined by the 3^{rd} Generation Partnership Project (3GPP). In one example, the communication network 100 may operate according to 3GPP (4G) LTE (Long-Term Evolution) or 3GPP 5G NR (New Radio). It is, however, appreciated that example embodiments presented herein are not limited to these example networks and may be applied in any present or future wireless communication networks, or combinations thereof, for example other type of cellular networks, short-range wireless networks, multicast networks, or the like.

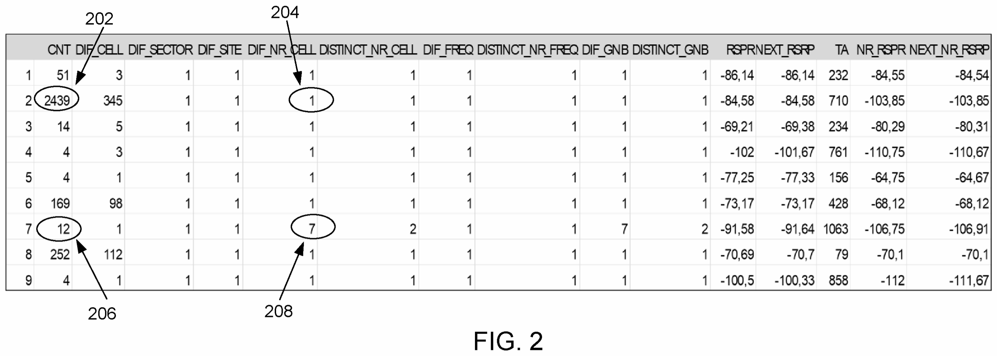

FIG. 2 illustrates an example of data analysed relating to a communication network according to an example embodiment. The example illustrates data relating to nine different users. A CNT column indicates the number of analysed samples relating to each user. A DIF_GNB column indicates how many times a serving base station (gNB) has changed for the indicated number of samples. For user 2, 2439 samples (indicated by a reference 202) have been analysed and the serving base station has not changed during these samples, as indicated by a reference 204. For user 7, 12 samples (indicated by a reference 206) have been analysed and the serving base station has changed seven times, as indicated by a reference 208. It is also known that user 7 is a stationary user device for which the serving base station should not change as it has. As there is an unclear dominance between different base stations for user 7, the current situation can be corrected, for example, by tilting an antenna of a base station such that the antenna is better directed towards the user. An effect of this action is that, after the tilting, the serving base station remains the same for user 7.

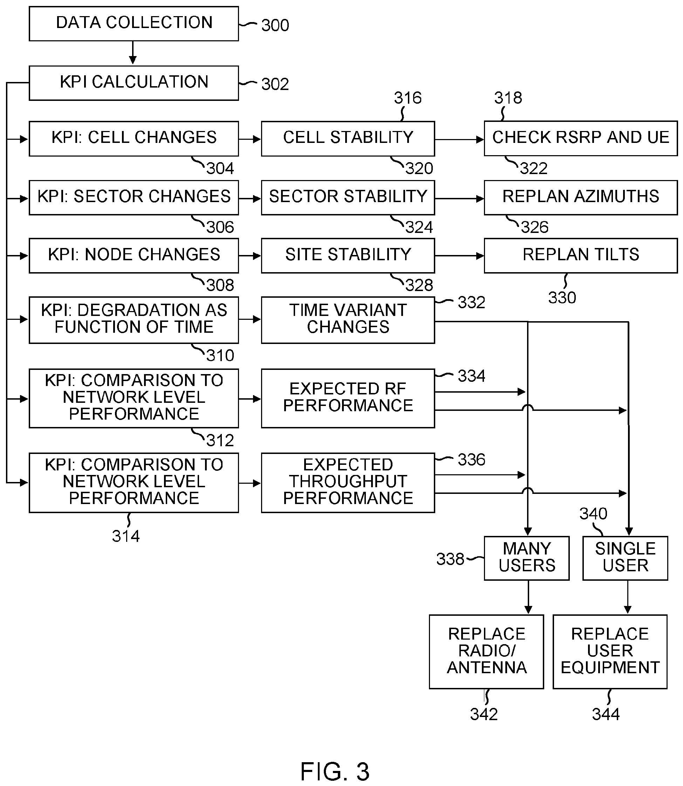

FIG. 3 illustrates a flow diagram for network optimization according to an example embodiment.

At 300, data associated with a plurality of user devices may be collected from one or more data sources. The data sources may comprise, for example, at least one of charging data records (CDR), user level (for example, layer 3) RF data, core network data, drive test data etc.

At 302, a plurality of KPIs 304-312 may have been determined based on the collected data. A KPI may relate, for example, to stability (for example, cell, sector or base station changes per time period, time per a cell), radio frequency statistics (for example, channel quality indicator (CQI)), RSRP, timing advance (TA), throughput, Signal to Interference plus Noise Ratio (SINR), uplink KPIs, uplink and downlink pathloss, RSRP as a function of TA, throughput as a function of RSRP), serving layers (for example, data layer frequency, time per frequency) or miscellaneous aspects (for example, is the serving cell the expected one, is RSRP as expected, maximum RSRP, maximum throughput, strange mobility, changing KPI as a function of time for a stationary user etc.).

If the KPI relates to the amount of cell changes 304, the determined KPI may be compared with a cell stability parameter 316. If there is a deviation from the cell stability parameter 316 or if the determined KPI does not fall within a predefined range set for the cell stability parameter 316, optimization information to optimize the performance of the communication network may be output. The output optimization information may, for example, indicate that the RSRP and UE should be checked when NR changes have been identified, as identified by a reference 318.

If the KPI relates to the amount of sector changes 306, the determined KPI may be compared with a sector stability parameter 324. If there is a deviation from the sector stability parameter 324 or if the determined KPI does not fall within a predefined range set for the sector stability parameter 324, optimization information to optimize the performance of the communication network may be output. The output optimization information may, for example, indicate that antenna azimuths should be replanned, as identified by a reference 326.

If the KPI relates to the amount of node changes 308, the determined KPI may be compared with a site stability parameter 328. If there is a deviation from the site stability parameter 328 or if the determined KPI does not fall within a predefined range set for the site stability parameter 328, optimization information to optimize the performance of the communication network may be output. The output optimization information may, for example, indicate that an antenna tilt or tilts should be replanned, as identified by a reference 330.

If the KPI relates to degradation as a function of time 310, the determined KPI may be compared with a time variant changes parameter 332. If there is a deviation from the time variant changes parameter 332 or if the determined KPI does not fall within a predefined range set for the time variant changes parameter 332 and the situation relates to a single user 340, optimization information to optimize the performance of the communication network may be output. The output optimization information may, for example, indicate that a user equipment should be replaced with a new one, as identified by a reference 344. On the other hand, if the situation relates to multiple users 338, optimization information to optimize the performance of the communication network may be output. The output optimization information may, for example, indicate that a radio and/or an antenna should be replaced with a new one, as identified by a reference 342.

If the KPI relates to comparison to network level performance 312, the determined KPI may be compared with an expected radio frequency parameter 334. If there is a deviation from the expected radio frequency parameter 334 or if the determined KPI does not fall within a predefined range set for the expected radio frequency parameter 334 and the situation relates to a single user 340, optimization information to optimize the performance of the communication network may be output. The output optimization information may, for example, indicate that a user equipment should be replaced with a new one, as identified by a reference 344. In an example embodiment, if the performance deviation associated with a single user happens only rarely (i.e. is not continuously present), there may be natural reasons for the performance deviation, for example, a heavy rain. On the other hand, if the performance deviation is detected continuously, it can be determined that there is a reason for the performance deviation. On the other hand, if the situation relates to multiple users 338, optimization information to optimize the performance of the communication network may be output. The output optimization information may, for example, indicate that a radio and/or an antenna should be replaced with a new one, as identified by a reference 342.

If the KPI relates to comparison to network level performance 314, the determined KPI may be compared with an expected throughput performance parameter 336. If there is a deviation from the expected throughput performance 336 or if the determined KPI does not fall within a predefined range set for the expected throughput performance parameter 336 and the situation relates to a single user 340, optimization information to optimize the performance of the communication network may be output. The output optimization information may, for example, indicate that a user equipment should be replaced with a new one, as identified by a reference 344. On the other hand, if the situation relates to multiple users 338, optimization information to optimize the performance of the communication network may be output. The output optimization information may, for example, indicate that a radio and/or an antenna should be replaced with a new one, as identified by a reference 342.

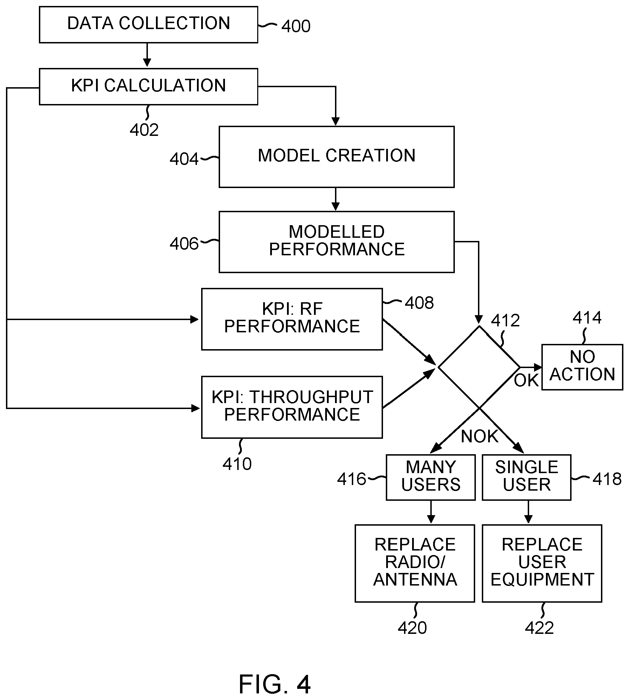

FIG. 4 illustrates a flow diagram for network optimization according to an example embodiment.

At 400, data associated with a plurality of user devices may be collected from one or more data sources. The data sources may comprise, for example, charging data records (CDR), user level (for example, layer 3) RF data, core network data, drive test data etc.

At 402, at least one KPI may be calculated based on the collected data. A KPI may relate, for example, to stability (for example, cell, sector or base station changes per time period, time per a cell), radio frequency statistics (for example, channel quality indicator (CQI)), RSRP, timing advance (TA), throughput, Signal to Interference plus Noise Ratio (SINR), uplink KPIs, uplink and downlink pathloss, RSRP as a function of TA, throughput as a function of RSRP), serving layers (for example, data layer frequency, time per frequency) or miscellaneous aspects (for example, is the serving cell the expected one, is RSRP as expected, maximum RSRP, maximum throughput, strange mobility, changing KPI as a function of time for a stationary user etc.).

At 404, one or more models may be created based on the calculated KPI(s). The model may be created, for example, based on layer 3 and/or drive test data. The model may be created based on sample data for which no performance problems have been issued. For example, based on the model, a graph showing TA (distance) vs. RSRP curves and their various percentiles may be provided, for example, 10 - 50 - 90 percentiles or a graph showing throughput vs RSRP curves and their various percentiles. In another example embodiment, based on the model the performance (RSRP) relating to an individual user may be compared to network level performance or compare the throughput obtained a from core network with RSRP.

At 406, modelled performance may be determined based on the model. The modelled performance may provide information how the performance should behave among a plurality of users, for example, in a single cell.

At 408, measured KPI data (for example, RF performance data) associated with one or more users may be obtained.

Similarly, at 410, measured KPI data (for example, throughput performance data) associated with one or more users may be obtained.

At 412, the obtained KPI data (RF performance) may be compared with the modelled performance. If RF the performance deviates from the model and there are many users 416 associated, optimization information to optimize the performance of the communication network may be output. The output optimization information may, for example, indicate that a radio and/or an antenna should be replaced with a new one, as identified by 420. If the RF performance deviates from the model and there is a single user 418 associated, optimization information to optimize the performance of the communication network may be output. The output optimization information may, for example, indicate that the UE should be replaced with a new one, as identified by a reference 422.

Further, 412, the obtained KPI data (throughput data) may be compared with the modelled performance. If the throughput performance deviates from the model and there are many users 416 associated, optimization information to optimize the performance of the communication network may be output. The output optimization information may, for example, indicate that a radio and/or an antenna should be replaced with a new one, as identified by 420. If the throughput performance deviates from the model and there is a single user 418 associated, optimization information to optimize the performance of the communication network may be output. The output optimization information may, for example, indicate that the UE should be replaced with a new one, as identified by a reference 422. In an example embodiment, if the performance deviation associated with a single user happens only rarely (i.e. is not continuously present), there may be natural reasons for the performance deviation, for example, a heavy rain. On the other hand, if the performance deviation is detected continuously, it can be determined that there is a reason for the performance deviation.

At 414, if there is no performance deviation, no action is required.

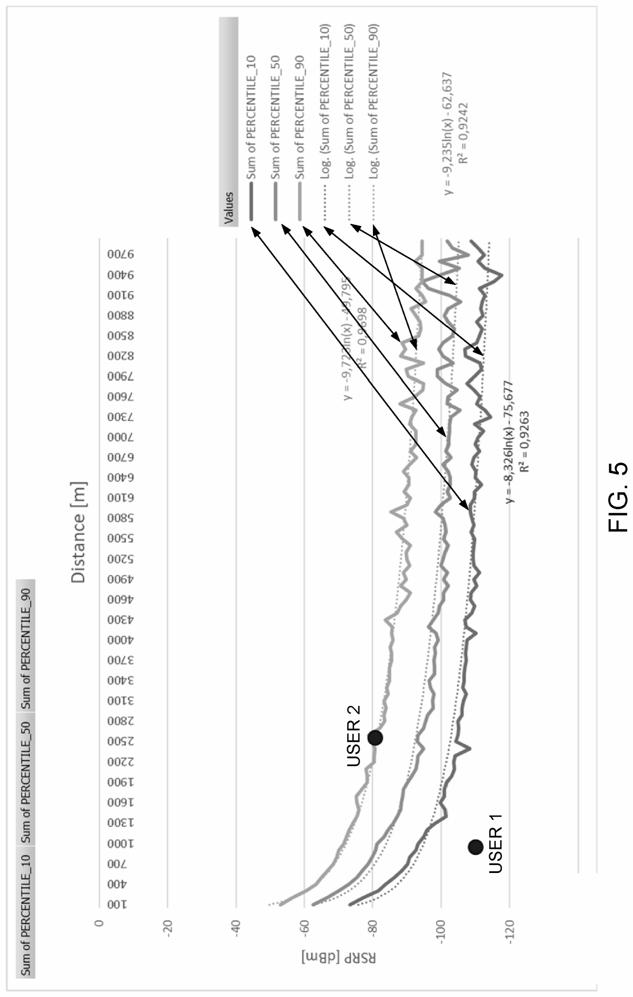

FIG. 5 illustrates a graph representing a model relating to expected radio frequency performance according to an embodiment of the invention.

The location of an individual user may be derived from layer 3 data. Alternatively, if the user is a fixed wireless access (FWA) user, the location of the user is known. The FWA user may be identified, for example, based on an international mobile subscriber identity (IMSI). Individual power levels (i.e. RSRP) of the user are retrieved from layer 3 data and combined with location (distance data). The distance (timing advance, TA) is a distance from a base station antenna to a UE. The RSRP is the power level at a given distance. Based on the distance and RSRP data, distance (TA) - power (RSRP) data points may be created, and they may be represented using a logarithmic scale.

The graph illustrates the distance (in meters) as a function of the RSRP (in dBm). Two users, USER 1 and USER 2, have been placed on the graph. It can be seen the RSRP of USER 2 is on percentile 90 curve (i.e., 10% best users). This means that there are no problems with USER 2. The RSRP of USER 1 is below 10 percentile (i.e., 10% worst users). This implicates that something is wrong with respect to USER 1. Based on the comparison between the collected data and the expected performance, optimization information to optimize the performance of the communication network may be output. For example, the UE used by USER 1 may be replaced.

FIG. 6 illustrates an example embodiment of an apparatus 600, for example a server, configured to perform one or more example embodiments. The apparatus 600 is used to implement the network automation system 140. The apparatus 600 may comprise at least one processor 602. The at least one processor 602 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

The apparatus 600 may further comprise at least one memory 604. The at least one memory 604 may be configured to store, for example, computer program code or the like, for example operating system software and application software. The at least one memory 604 may comprise one or more volatile memory devices, one or more non-volatile memory devices, and/or a combination thereof. For example, the at least one memory 604 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

The apparatus 600 may further comprise a communication interface 608 configured to enable the apparatus 600 to transmit and/or receive information to/from other devices, functions, or entities.

The apparatus 600 may further comprise a user interface 610 configured to enable the apparatus 600 to receive user input from a user.

When the apparatus 600 is configured to implement some functionality, some component and/or components of the apparatus 600, such as for example the at least one processor 602 and/or the at least one memory 604, may be configured to implement this functionality. Furthermore, when the at least one processor 602 is configured to implement some functionality, this functionality may be implemented using program code 606 comprised, for example, in the at least one memory 604.

The functionality described herein may be performed, at least in part, by one or more computer program product components such as for example software components. According to an embodiment, the apparatus comprises a processor or processor circuitry, such as for example a microcontroller, configured by the program code when executed to execute the embodiments of the operations and functionality described. A computer program or a computer program product may therefore comprise instructions for causing, when executed, the apparatus 600 to perform the method(s) described herein. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

The apparatus 600 comprises means for performing at least one method described herein. In one example, the means comprises the at least one processor 602, the at least one memory 604 including program code 606 configured to, when executed by the at least one processor, cause the apparatus 600 to perform the method.

The apparatus 600 may comprise a computing device such as for example an access point, a server, a network device, a network function device, or the like. Although the apparatus 600 is illustrated as a single device it is appreciated that, wherever applicable, functions of the apparatus 600 may be distributed to a plurality of devices, for example to implement example embodiments as a cloud computing service.

FIG. 7 illustrates a computer-implemented method for user driven optimization of a communication network according an embodiment of the invention.

At 700, the method comprises obtaining user level radio frequency data associated with a communication network.

At 702, the method analysing analysing the user level radio frequency data to identify a performance or a performance deviation of at least one stationary user device.

At 704, the method comprises outputting, based on the analysis, optimization information to optimize the performance associated with the at least one stationary user device.

Further features of the method directly result for example from the functionalities of the network automation system 140, as described throughout the specification and in the appended claims, and are therefore not repeated here. Different variations of the method may be also applied, as described in connection with the various example embodiments.

An apparatus, such as for example a network device configured to implement one or more network functions or entities, may be configured to perform or cause performance of any aspect of the method(s) described herein. Further, a computer program or a computer program product may comprise instructions for causing, when executed, an apparatus to perform any aspect of the method(s) described herein. Further, an apparatus may comprise means for performing any aspect of the method(s) described herein. According to an example embodiment, the means comprises at least one processor, and memory including program code, the at least one processor, and program code configured to, when executed by the at least one processor, cause performance of any aspect of the method(s).

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

Although subjects may be referred to as "first" or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. A computer-implemented method performed by an apparatus used to implement a network automation system, comprising:
obtaining (700) user level layer 3 radio frequency data of a plurality of user devices, the user level layer 3 radio frequency data being associated with a communication network;
analysing (702) the user level layer 3 radio frequency data to identify a performance of at least one stationary user device (110), wherein the analysing comprises calculating at least one key performance indicator, KPI, based on the user level layer 3 radio frequency data, wherein the at least one KPI comprises reference signal received power, RSRP, of the at least one stationary user device (110) combined with timing advance, TA, and creating a performance model based at least in part of the user level layer 3 radio frequency data and the at least one KPI; and
outputting (704), based on the analysis, optimization information to optimize the performance associated with the at least one stationary user device (110).

2. The method according to claim 1, wherein outputting optimization information comprises outputting an instruction to replace a stationary user device.

3. The method according to claim 1, wherein outputting optimization information comprises outputting an instruction to replace a radio network element of the communications network.

4. The method according to claim 1, wherein outputting optimization information comprises outputting an instruction to redirect an antenna of a radio network element of the communications network.

5. The method according to claim 1, wherein outputting optimization information comprises outputting an instruction to change a physical location of a radio network element of the communications network.

6. The method according to any one of claims 1 - 5, further comprising:
identifying different users in the user level radio frequency data based on an international mobile subscriber identity.

7. The method according to any one of claims 1 - 6, wherein:
analysing the user level radio frequency data comprises determining, based on the user level radio frequency data, that a condition associated with at least one key performance indicator is triggered with respect to the at least one stationary user device (110); and
outputting the optimization information comprises outputting the optimization information based on the determination.

8. The method according to any one of claims 1 - 7, further comprising:
comparing performance of stationary user devices to the performance model; and
identifying the at least one stationary user device (110) based on the comparison.

9. The method according to claim 7 or 8, wherein the at least one key performance indicator comprises at least one of:
cell stability;
sector stability;
site stability;
time variant changes;
expected radio frequency performance; and
expected throughput performance.

10. An apparatus (600) used to implement a network automation system (140) comprising means for performing the method according to any of claims 1 to 9.

11. The apparatus (600) of claim 10, wherein the means comprise at least one processor (602) and at least one memory (604) including computer program code (606), and wherein the at least one memory (604) and the computer program code (606) are configured to, with the at least one processor (602), cause the performance of the apparatus (600).

12. A computer program comprising program code configured to, when executed by a processor (602) of an apparatus used to implement a network automation system (140), cause the apparatus (600) at least to perform the method according to any of claims 1 to 9.

## Patentansprüche

1. Computerimplementiertes Verfahren, ausgeführt durch eine Einrichtung, die verwendet wird, um ein Netzautomatisierungssystem zu implementieren, umfassend:
Erhalten (700) von benutzerebenenbezogenen Funkfrequenzdaten der Schicht 3 einer Vielzahl von Benutzervorrichtungen, wobei die benutzerebenenbezogenen Funkfrequenzdaten der Schicht 3 mit einem Kommunikationsnetz verknüpft sind;
Analysieren (702) der benutzerebenenbezogenen Funkfrequenzdaten der Schicht 3, um eine Leistung von mindestens einer stationären Benutzervorrichtung (110) zu identifizieren, wobei das Analysieren das Berechnen von mindestens einer Leistungskennzahl, KPI, basierend auf den benutzerebenenbezogenen Funkfrequenzdaten der Schicht 3, wobei die mindestens eine Leistungskennzahl (KPI) die Referenzsignal-Empfangsleistung, RSRP, der mindestens einen stationären Benutzervorrichtung (110), kombiniert mit Timing Advance, TA, umfasst, und das Erzeugen eines Leistungsmodells basierend zumindest teilweise auf den benutzerebenenbezogenen Funkfrequenzdaten der Schicht 3 und der mindestens einen Leistungskennzahl (KPI) umfasst;
und
Ausgeben (704), basierend auf der Analyse, von Optimierungsinformation, um die mit der mindestens einen stationären Benutzervorrichtung (110) verknüpfte Leistung zu optimieren.

2. Verfahren nach Anspruch 1, wobei das Ausgeben von Optimierungsinformation das Ausgeben einer Anweisung zum Ersetzen einer stationären Benutzervorrichtung umfasst.

3. Verfahren nach Anspruch 1, wobei das Ausgeben von Optimierungsinformation das Ausgeben einer Anweisung zum Ersetzen eines Funknetzelements des Kommunikationsnetzes umfasst.

4. Verfahren nach Anspruch 1, wobei das Ausgeben von Optimierungsinformation das Ausgeben einer Anweisung zum Neuausrichten einer Antenne eines Funknetzelements des Kommunikationsnetzes umfasst.

5. Verfahren nach Anspruch 1, wobei das Ausgeben von Optimierungsinformation das Ausgeben einer Anweisung zum Ändern eines physischen Standorts eines Funknetzelements des Kommunikationsnetzes umfasst.

6. Verfahren nach einem der Ansprüche 1 - 5, weiter umfassend:
Identifizieren verschiedener Benutzer in den benutzerebenenbezogenen Funkfrequenzdaten basierend auf einer internationalen Mobilfunk-Teilnehmerkennung.

7. Verfahren nach einem der Ansprüche 1 - 6, wobei:
das Analysieren der benutzerebenenbezogenen Funkfrequenzdaten umfasst, basierend auf den benutzerebenenbezogenen Funkfrequenzdaten zu bestimmen, dass eine Bedingung, die mit mindestens einer Leistungskennzahl verknüpft ist, in Bezug auf die mindestens eine stationäre Benutzervorrichtung (110) ausgelöst wird; und
das Ausgeben der Optimierungsinformation umfasst, die Optimierungsinformation basierend auf der Bestimmung auszugeben.

8. Verfahren nach einem der Ansprüche 1 - 7, weiter umfassend:
Vergleichen einer Leistung von stationären Benutzervorrichtungen mit dem Leistungsmodell; und
Identifizieren der mindestens einen stationären Benutzervorrichtung (110) basierend auf dem Vergleich.

9. Verfahren nach Anspruch 7 oder 8, wobei die mindestens eine Leistungskennzahl mindestens eines von Folgendem umfasst:
Zellstabilität;
Sektorstabilität;
Standortstabilität;
zeitvariable Änderungen;
erwartete Funkfrequenzleistung; und
erwartete Durchsatzleistung.

10. Einrichtung (600), die verwendet wird, um ein Netzautomatisierungssystem (140) zu implementieren, umfassend Mittel zum Ausführen des Verfahrens nach einem der Ansprüche 1 bis 9.

11. Einrichtung (600) nach Anspruch 10, wobei die Mittel mindestens einen Prozessor (602) und mindestens einen Speicher (604), der Computerprogrammcode (606) einschließt, umfassen, und wobei der mindestens eine Speicher (604) und der Computerprogrammcode (606) dazu ausgebildet sind, mit dem mindestens einen Prozessor (602) die Ausführung durch die Einrichtung (600) zu bewirken.

12. Computerprogramm, umfassend Programmcode, der dazu ausgebildet ist, bei Ausführung durch einen Prozessor (602) einer Einrichtung, die verwendet wird, um ein Netzautomatisierungssystem (140) zu implementieren, zu bewirken, dass die Einrichtung (600) mindestens das Verfahren nach einem der Ansprüche 1 bis 9 ausführt.

## Revendications

1. Procédé mis en œuvre par ordinateur réalisé par un appareil utilisé pour mettre en œuvre un système d'automatisation de réseau, comprenant :
l'obtention (700) de données de radiofréquence de couche 3 au niveau utilisateur d'une pluralité de dispositifs utilisateur, les données de radiofréquence de couche 3 au niveau utilisateur étant associées à un réseau de communication ;
l'analyse (702) des données de radiofréquence de couche 3 au niveau utilisateur pour identifier une performance d'au moins un dispositif utilisateur stationnaire (110), dans lequel l'analyse comprend le calcul d'au moins un indicateur clé de performance, ICP, sur la base des données de radiofréquence de couche 3 au niveau utilisateur, dans lequel l'au moins un ICP comprend la puissance de réception du signal de référence, RSRP, de l'au moins un dispositif utilisateur stationnaire (110) combinée à l'avance temporelle, TA, et la création d'un modèle de performance fondé au moins en partie sur les données de radiofréquence de couche 3 au niveau utilisateur et sur l'au moins un ICP ;
et
la délivrance (704), sur la base de l'analyse, d'informations d'optimisation pour optimiser la performance associée à l'au moins un dispositif utilisateur stationnaire (110).

2. Procédé selon la revendication 1, dans lequel la délivrance d'informations d'optimisation comprend la délivrance d'une instruction visant à remplacer un dispositif utilisateur stationnaire.

3. Procédé selon la revendication 1, dans lequel la délivrance d'informations d'optimisation comprend la délivrance d'une instruction visant à remplacer un élément de réseau radio du réseau de communication.

4. Procédé selon la revendication 1, dans lequel la délivrance d'informations d'optimisation comprend la délivrance d'une instruction visant à rediriger une antenne d'un élément de réseau radio du réseau de communication.

5. Procédé selon la revendication 1, dans lequel la délivrance d'informations d'optimisation comprend la délivrance d'une instruction visant à modifier un emplacement physique d'un élément de réseau radio du réseau de communication.

6. Procédé selon l'une quelconque des revendications 1 à 5, comprenant en outre :
l'identification de différents utilisateurs dans les données de radiofréquence au niveau utilisateur sur la base d'une identité internationale d'abonné mobile.

7. Procédé selon l'une quelconque des revendications 1 à 6, dans lequel :
l'analyse des données de radiofréquence au niveau utilisateur comprend la détermination, sur la base des données de radiofréquence au niveau utilisateur, qu'une condition associée à au moins un indicateur clé de performance est déclenchée en ce qui concerne l'au moins un dispositif utilisateur stationnaire (110) ; et
la délivrance des informations d'optimisation comprend la délivrance des informations d'optimisation sur la base de la détermination.

8. Procédé selon l'une quelconque des revendications 1 à 7, comprenant en outre :
la comparaison de la performance de dispositifs utilisateur stationnaires au modèle de performance ; et
l'identification de l'au moins un dispositif utilisateur stationnaire (110) sur la base de la comparaison.

9. Procédé selon la revendication 7 ou la revendication 8, dans lequel l'au moins un indicateur clé de performance comprend au moins l'un parmi :
la stabilité de cellule ;
la stabilité de secteur ;
la stabilité de site ;
les changements variant dans le temps ;
la performance de radiofréquence attendue ; et
la performance de débit attendue.

10. Appareil (600) utilisé pour mettre en œuvre un système d'automatisation de réseau (140) comprenant des moyens pour réaliser le procédé selon l'une quelconque des revendications 1 à 9.

11. Appareil (600) selon la revendication 10, dans lequel les moyens comprennent au moins un processeur (602) et au moins une mémoire (604) incluant un code de programme informatique (606), et dans lequel l'au moins une mémoire (604) et le code de programme informatique (606) sont configurés pour, avec l'au moins un processeur (602), entraîner la performance de l'appareil (600).

12. Programme informatique comprenant un code de programme configuré pour, lorsqu'il est mis en œuvre par un processeur (602) d'un appareil utilisé pour mettre en œuvre un système d'automatisation de réseau (140), amener l'appareil (600) au moins à réaliser le procédé selon l'une quelconque des revendications 1 à 9.
